# EUROPÄISCHE PATENTSCHRIFT

(11) **EP 3 027 944 B1**
(45) Veröffentlichungstag und Bekanntmachung des Hinweises auf die Patenterteilung: **18.04.2018**
(21) Anmeldenummer: 14742244.8
(22) Anmeldetag: 24.07.2014
(51) Int. Cl.: F16K 31/08, F25B 41/04, F16K 31/06

(54) **MAGNETVENTIL UND DIESES VERWENDENDE KÄLTEMASCHINE**
SOLENOID VALVE AND REFRIGERATION MACHINE WHICH USES SAME
SOUPAPE ÉLECTROMAGNÉTIQUE ET MACHINE FRIGORIFIQUE UTILISANT LADITE SOUPAPE ÉLECTROMAGNÉTIQUE

(30) Priorität: 02.08.2013 DE 102013215261
(43) Veröffentlichungstag der Anmeldung: 08.06.2016
(73) Patentinhaber: BSH Hausgeräte GmbH, 81739 München (DE)
(72) Erfinder: BASSMANN, Stefan, 89537 Giengen (DE); HEYNE, Raik, 98693 Illmenau (DE); SEITZ, Manuel, 89290 Obenhausen (DE)
(86) Internationale Anmeldenummer: PCT/EP2014/065952
(87) Internationale Veröffentlichungsnummer: WO 2015/014718

(56) Entgegenhaltungen:
- EP-A2- 0 061 104
- DE-A1-102007 023 659
- DE-U1- 9 408 660
- FR-A1- 2 761 445
- JP-U- S58 165 377
- US-A- 369 032
- US-A- 4 071 045

## Beschreibung

Die vorliegende Erfindung betrifft ein Magnetventil, insbesondere zur Verwendung in einer Kältemaschine eines Haushaltskältegerätes wie etwa einer Gefriertruhe, eines Kühlschranks etc.

JP S58-165377U zeigt ein Magnetventil, bei dem ein Schließkörper zwischen zwei in einem Rohr verpressten Sitzen beweglich ist. Um das Ventil offenzuhalten, muss der Schließkörper durch einen Magneten in einer Stellung zwischen den beiden Ventilsitzen festgehalten werden. Eine schnelle Strömung kann den Schließkörper von dieser Zwischenstellung fortreißen und gegen einen der Ventilsitze treiben, so dass das Ventil blockiert.

EP 0 061 104 A2 offenbart ein Magnetventil für eine Kältemaschine, dessen Gehäuse zwei Leitungsanschlüsse aufweist, deren Durchmesser jeweils kleiner ist als der eines in dem Gehäuse untergebrachten Ventilsitzes.

US 369 032 A zeigt einen Abscheider zum Ablassen von Wasser aus einer Dampfleitung. An einem Ventilsitz, der aus der Leitung ins Freie führt, ist ein Schließkörper in einem Käfig gefangen.

US 4 071 045 A offenbart ein Rückschlagventil, bei dem eine Baugruppe umfassend einen Ventilsitz, einen an dem Ventilsitz verankerten Käfig und einen in dem Käfig beweglichen Schließkörper in einem Kältemittelrohr verpresst ist.

Es besteht Bedarf nach einem Magnetventil, das einfach realisierbar und zum Schalten schneller Strömungen geeignet ist und mit geringem Aufwand in eine Kältemaschine eingebaut werden kann.

Die Aufgabe wird erfindungsgemäß gelöst durch eine Kombination von einem Magnetventil für eine Kältemaschine mit einem ein Kältemittel führenden ersten Rohr, und mit einem ein Kältemittel führenden zweiten Rohr mit den Merkmalen des Anspruchs 1. Als Rohr der Kombination kann unmittelbar eine Kältemittelleitung einer Kältemaschine verwendet werden, so dass die Anzahl der beim Einbau des Magnetventils hermetisch dicht zu verbindenden Anschlüsse verringert ist.

Im Allgemeinen wird der Ventilsitz in dem Rohr unweit eines Anschlussendes verpresst sein, durch welches er ursprünglich in das Rohr eingeführt worden ist. Über den Schließkörper hinaus kann sich das Rohr beliebig weit, bis zu einer anderen Komponente der Kältemaschine, wie etwa einem Verdampfer, erstrecken. Da das Rohr in dieser Richtung einteilig und deshalb frei von Schwachstellen ist, die durch eine Schwingbewegung des Magnetventils strapaziert werden könnten, kann eine Befestigung an diesem Rohr in beträchtlicher Entfernung vom Magnetventil angeordnet sein, so dass die ganze Länge des Rohrs zwischen Befestigung und Magnetventil zur Verfügung steht, um durch die Bewegung des Schließkörpers verursachte Erschütterungen zu dämpfen, bevor sie sich auf den Korpus eines Geräts, in dem das Magnetventil verbaut ist, übertragen können. Auf diese Weise ist mit dem erfindungsgemäßen Magnetventil auch eine Verringerung der Betriebsgeräuschemission erreichbar.

Insbesondere kann der Ventilsitz zwischen dem Permanentmagneten und dem Schließkörper angeordnet sein, so dass die von dem Permanentmagneten festgelegte Ruhestellung eine Schließstellung des Ventils ist, in der Schließkörper am Ventilsitz fest gehalten ist und an diesem abdichtet.

Um ein Hineindrücken des Rohrs in die Aussparung des Grundkörpers zu erleichtern, ist es zweckmäßig, wenn sich die Aussparung rings um den Grundkörper erstreckt.

Der Grundkörper kann ferner einen umlaufenden Dichtring tragen, um sicherzustellen, dass zwischen ihm und der umgebenden Wandung des Rohrs kein Kältemittel hindurchtreten kann und der Kältemittelstrom durch Anliegen des Schließkörpers am Ventilsitz vollständig blockiert werden kann.

Sofern der Grundkörper nicht selbst der Permanentmagnet ist, ist er vorzugsweise ferromagnetisch, um unter dem Einfluss des Permanentmagneten selbst als Magnet zu wirken und so den Schließkörper sicher in einer Ruhestellung, z.B. der Schließstellung am Ventilsitz, festzuhalten.

Der Ventilsitz ist ein einteiliger Bestandteil des Grundkörpers. Der Käfig kann zum Ventilsitz hin verjüngt sein, um bei einem Schließen des Magnetventils den Schließkörper zum Ventilsitz zu führen.

Eine Spule zur Erzeugung des Magnetfeldes kann um das Rohr herum angeordnet sein. Ein solcher Aufbau macht die im eingangs zitierten Stand der Technik beschriebenen Polschuhe zum Einkoppeln des Magnetfeldes der Spule in das Rohr überflüssig.

Der Permanentmagnet kann im Innern der Spule angeordnet sein und ihr so als Eisenkern zur Steigerung des magnetischen Flusses dienen.

Zum gleichen Zweck kann auch der ferromagnetische Grundkörper im Innern der Spule angeordnet sein.

Je nach elektrischer Polung kann die Spule betrieben werden, um das Feld des Permanentmagneten aufzuheben und dadurch ein Lösen des Schließkörpers vom Ventilsitz zu ermöglichen, oder um das Magnetfeld des Permanentmagneten zu verstärken und so den Schließkörper auf den Ventilsitz zu ziehen.

Gegenstand der Erfindung ist auch eine Kältemaschine, insbesondere für Haushaltskältegeräte, mit wenigstens einem in einer Kältemittelleitung angeordneten Magnetventil wie oben beschrieben. Das Magnetventil ist vorzugsweise so in die Kältemittelleitung eingefügt, dass der Schließkörper stromabwärts vom Ventilsitz angeordnet ist. So kann der Druck des Kältemittels den Schließkörper vom Ventilsitz forttreiben, wenn dieser nicht magnetisch am Ventilsitz festgehalten ist.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine auseinandergezogene perspektivische Ansicht von Teilen eines ersten erfindungsgemäßen Magnetventils;
- Fig. 2: ein zweites erfindungsgemäßes Magnetventil im axialen Schnitt;
- Fig. 3: ein zweites erfindungsgemäßes Magnetventil im axialen Schnitt; und
- Fig. 4: ein Blockdiagramm einer mit Magnetventilen nach Fig. 1, 2 oder 3 ausgestatteten Kältemaschine.

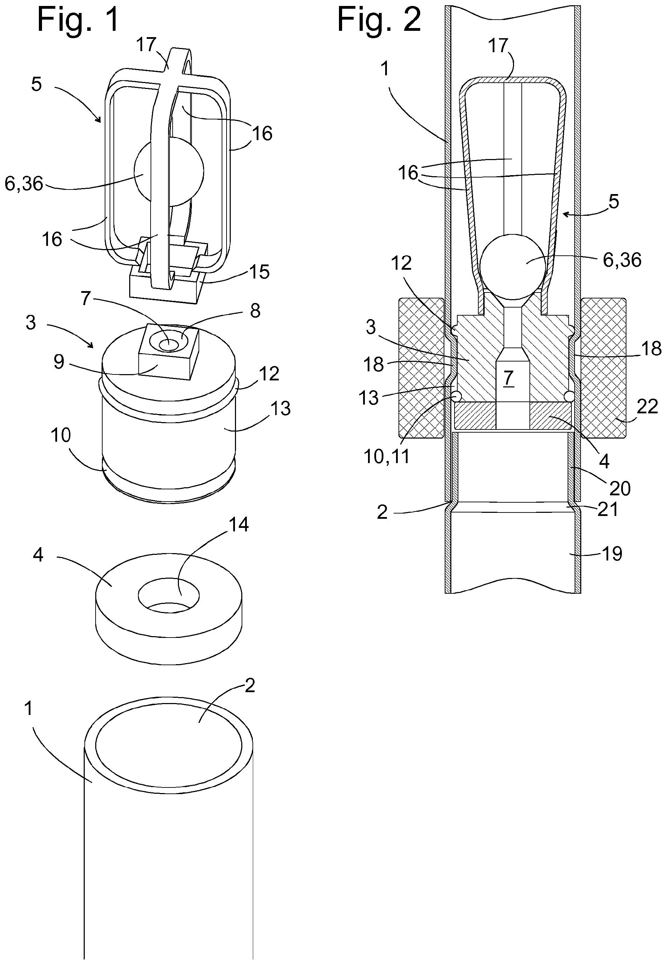

Fig. 1 zeigt in einer Explosionsdarstellung Teile eines Magnetventils gemäß der vorliegenden Erfindung. Das Magnetventil umfasst ein Rohr 1 aus Kupfer oder einem anderen gut verformbaren diamagnetischen Material. Von dem Rohr 1 ist in Fig. 1 nur ein kurzes Stück mit einer Anschlussöffnung 2 gezeigt, in der Praxis ist das Rohr1 um ein Vielfaches länger als die in ihm zu montierenden Komponenten des Magnetventils, als da sind: ein Grundkörper 3, ein Permanentmagnet 4, ein Käfig 5 und ein in dem Käfig 5 beweglicher Schließkörper 6, hier eine Kugel 36.

Der Grundkörper 3 ist ein im Wesentlichen zylindrischer Körper aus ferromagnetischem Material, insbesondere Eisen, durch den sich axial eine Bohrung 7 erstreckt. Die Bohrung 7 mündet auf einen kegelförmigen Ventilsitz 8 an der Spitze eines von einer Stirnseite des Grundkörpers 3 abstehenden Vorsprungs 9. Eine umlaufende Nut 10 am Umfang des Grundkörpers 3 ist vorgesehen, um einen in Fig. 2 gezeigten Elastomer-Dichtring 11 aufzunehmen. Zwischen diesem und einem umlaufenden Wulst 12 erstreckt sich eine Aussparung 13 rings um den Grundkörper 3.

Der Permanentmagnet 4 ist ringförmig, mit einer durchgehenden Bohrung 14, die mit der Bohrung 7 des Grundkörpers 3 fluchtet. Mittel zur Befestigung des Permanentmagneten 4 am Grundkörper 3 sind nicht vorgesehen, da beide magnetisch fest aneinander haften.

Der Käfig 5 hat ein Fußstück 15 mit einer Öffnung, die geformt ist, um den Vorsprung 9 des Grundkörpers 3 aufzunehmen und durch Verpressen, Verlöten oder dergleichen an dem Vorsprung 9 befestigt zu werden. Von dem Fußstück 15 gehen mehrere Streben 16 aus. Die Streben 16 erstrecken sich im Wesentlichen in axialer Richtung der Rohrleitung 1 und sind an ihren vom Fußstück 15 abgewandten Enden durch ein Kreuz 17 einteilig verbunden. Der Abstand zwischen den Streben 16 kann geringfügig größer sein als der Durchmesser der Kugel 36, so dass diese vor dem Einfügen in die Rohrleitung 1 bequem in den Käfig 5 eingesetzt werden kann. Nach Anbringung des Käfigs 5 in der Rohrleitung 1 kann die Kugel 36 nicht mehr aus dem Käfig 5 entweichen, da in radialer Richtung der Durchgang zwischen den Streben 16 von dem Rohr 1 versperrt ist und in axialer Richtung der freie Querschnitt zwischen den Armen des Kreuzes 17 nicht ausreicht.

Fig. 2 zeigt ein fertig zusammengefügtes Magnetventil in einem axialen Längsschnitt. Um das Ventil so wie in der Figur gezeigt zu montieren, wird zunächst der Dichtring 11 in der Nut 10 des Grundkörpers 3 platziert, und der Grundkörper 3 wird mit dem Käfig 5 und dem Permanentmagneten 4 zu einer Baugruppe verbunden. Diese Baugruppe wird in die Rohrleitung 1 über deren Anschlussöffnung 2 eingeschoben. Da der Dichtring auf seinem gesamten Umfang an der Wandung des Rohrs 1 anliegt, ist die Baugruppe provisorisch reibschlüssig in dem Rohr 1 fixiert.

Die Baugruppe kann sowohl mit dem Permanentmagneten 4 voran als auch, wie in Fig. 2 dargestellt, mit dem Käfig 5 voran in die das Rohr 1 eingeschoben werden. Letztere Orientierung ist bevorzugt, da, wenn zum Einführen kein Druck auf den Käfig 5 ausgeübt werden muss, dieser leicht und dünnwandig ausgeführt sein kann. Ein weiterer Vorteil dieser Orientierung ist, dass beim Zusammenfügen des Rohrs 1 mit einem zweiten Rohr 19 ein verjüngter Abschnitt 20 der letzteren beim Einschieben in das Rohr 1 an eine massive Komponente der Baugruppe, hier den Permanentmagneten 4, anstoßen und beim weiteren Einschieben die Baugruppe vor sich herschieben kann. Wenn der verjüngte Abschnitt 20 komplett in das Rohr 1 eingeschoben ist, so dass eine Schulter 21 des Rohrs 19 an die Anschlussöffnung 2 anstößt, befindet sich die Aussparung 13 in einer festen, bekannten Entfernung von der Anschlussöffnung 2. In dieser bekannten Entfernung von der Anschlussöffnung 2 kann nun eine Zange an das Rohr 1 angesetzt werden, um die in die Aussparung 13 eingreifende Einbuchtungen 18 zu formen und die Baugruppe so in der Rohrleitung 1 zu fixieren.

Eine Spule 22 ist vor dem Zusammenstecken der Rohre 1, 19 auf das Rohr 1 aufgeschoben. Die Spule 22 wird in einer Stellung an dem Rohr 1 befestigt, in der sie die Einbuchtungen 18 überdeckt. So überlappt sie axial mit dem Ventilsitz 3 und, im hier gezeigten Fall, auch mit dem Permanentmagneten 4, so dass beide der Spule 22 als Eisenkern dienen können. Diese Doppelfunktion von Ventilsitz 3 und Permanentmagnet 4 spart Gewicht und Bauraum.

Wenn die Spule 22 mit Strom versorgt ist, erzeugt sie in der Rohrleitung 1 ein axial orientiertes Magnetfeld, das je nach Richtung des Stroms parallel oder antiparallel zum Feld des Permanentmagneten 4 ist. Wenn das antiparallele Feld das Feld des Permanentmagneten 4 kompensiert, ist die Kugel 36 keiner magnetischen Anziehungskraft mehr ausgesetzt und kann von in dem Rohr 19 anstehendem Kältemittel aus ihrer Ruhestellung am Ventilsitz 8 fortgedrückt werden. Die so erreichte Offenstellung des Magnetventils kann auch in stromlosem Zustand der Spule 22 bestehen bleiben, wenn die Strömung des Kältemittels stark genug ist, um die Kugel 36 vom Grundkörper 3 und dem dort wirkenden Feld des Permanentmagneten 4 fern zu halten.

Wird hingegen die Spule 22 in entgegengesetzter Richtung bestromt, dann verstärken sich ihr Magnetfeld und das des Permanentmagneten 4 gegenseitig, die Kugel 36 wird an den Ventilsitz 8 herangezogen und verschließt diesen wieder.

Um das Ventil schnell zu schließen, sollte die Kugel 36 möglichst zentral auf den Ventilsitz 8 auftreffen. Wie in Fig. 2 zu erkennen, wird dies erleichtert durch eine sich zum Ventilsitz 8 hin verjüngende Form des Käfigs 5.

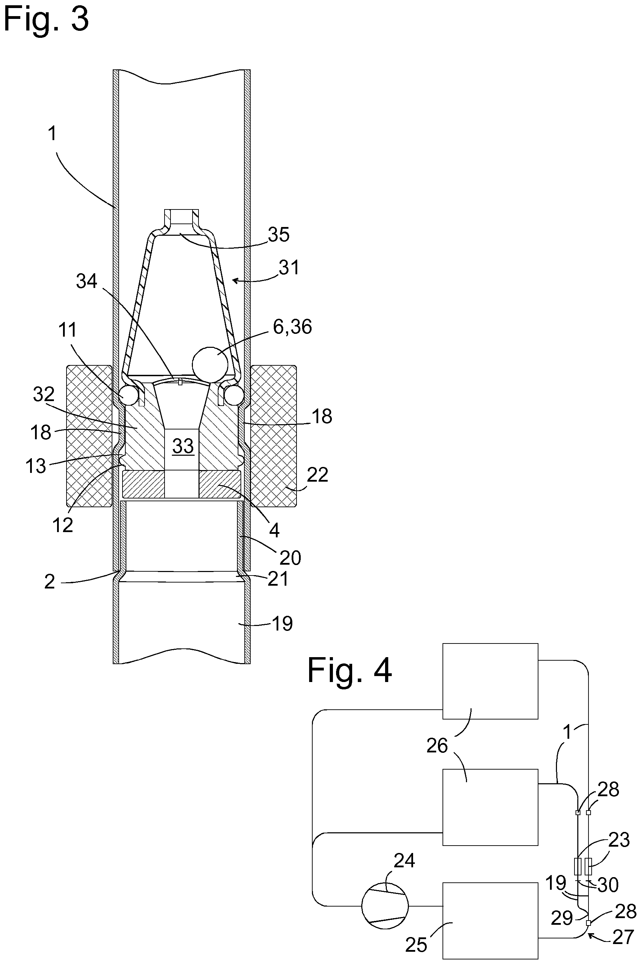

Fig. 3 zeigt einen zu Fig. 2 analogen axialen Schnitt durch ein weiteres erfindungsgemäßes Magnetventil. Komponenten, die bereits mit Bezug auf Fig. 1 oder 2 bereits beschriebenen Komponenten entsprechen, tragen dieselben Bezugszeichen wie dort und werden nicht erneut erläutert. Im Gegensatz zum Käfig 5, zwischen dessen Streben 16 das Kältemittel frei hindurchfließen kann und die lediglich die Bewegungsfreiheit des wiederum als Kugel 36 ausgebildeten Schließkörpers 6 einschränken, ist hier ein geschlossenwandiger Käfig 31 aus nichtmagnetischem Material vorgesehen. Eine Einlassöffnung des Käfigs 31 ist an einem ferromagnetischen Grundkörper 32 befestigt, der außerhalb des Rohrs 1 von der Spule 22 umgeben ist. Der Grundkörper 32 hat einen geräumigen Durchgang 33, der von der Kugel 36 nicht versperrbar ist. Eine Sperre, hier in Form zweier sich kreuzender Streben 34, hindert die Kugel 36 daran, unter dem Einfluss des Permanentmagneten 4 in den Durchgang 33 einzudringen. Eine der Einlassöffnung gegenüberliegende Auslassöffnung des Käfigs 31 bildet einen Ventilsitz 35.

In der gezeigten Offenstellung ist die Kugel 36 durch den Permanentmagneten 4 abseits des Durchgangs 33 in Kontakt mit dem ferromagnetischen Grundkörper 32 gehalten. Um das Ventil zu schließen, wird die Spule 22 mit einem Stromimpuls beaufschlagt, der im Grundkörper 32 ein dem Magnetfeld des Permanentmagneten 4 entgegengesetztes Magnetfeld erzeugt. Die Kugel 36 ist dadurch nicht mehr am Grundkörper 32 gehalten und wird von der Strömung des Kältemittels mitgerissen, bis sie den Ventilsitz 35 erreicht und das Ventil schließt.

Wird die Spule hingegen mit einem Stromimpuls mit entgegengesetztem Vorzeichen beaufschlagt, dann ist das resultierende Magnetfeld in derselben Richtung orientiert wie das des Permanentmagneten. Die auf die Kugel 36 einwirkende Magnetkraft genügt nun, um die Kugel 36 vom Ventilsitz 35 zu lösen und das Ventil wieder zu öffnen.

Fig. 4 zeigt schematisch eine Kältemaschine, die Magnetventile 23 des oben beschriebenen Typs verwendet. Die Kältemaschine umfasst in fachüblicher Weise einen Verdichter 24, einen an den Druckausgang des Verdichters 24 angeschlossenen Verflüssiger 25 und zwei zueinander parallele, mit dem Ausgang des Verflüssigers über eine sich verzweigende Kältemittelleitung 27 verbundene Verdampfer 26, die verschiedene Fächer, zum Beispiel ein Normalkühlfach und ein Gefrierfach, eines Kombinationskältegeräts kühlen. Die Kältemittelleitung 27 umfasst zwei Rohre 19, die sich von der Verzweigung 29 aus bis knapp vor die Magnetventile 23 erstrecken. An Stellen 30 sind die Rohre 19 mit Rohren 1 steckverbunden und verlötet, in die die Baugruppen der Ventile 23 eingeschoben sind und die sich einteilig durchgehend bis zu den Verdampfern 26 erstrecken.

Die Kältemittelleitung 27 ist an mehreren Stellen, zum Beispiel durch Rohrschellen 28, am Gehäuse des Kältegeräts fixiert. Die Magnetventile 23 sind in den zwei Zweigen der Kältemittelleitung 27 jeweils beabstandet von den Rohrschellen 28 angeordnet, so dass die zwischen den Rohrschellen 28 liegenden, die Ventile 23 aufnehmenden Abschnitte der Leitung 27 in gewissem Umfang schwingfähig sind und dadurch in der Lage sind, beim Schalten der Ventile 23 auftretende Erschütterungen zu dämpfen, bevor diese die Rohrschellen 28 erreichen und den Korpus zum Schwingen anregen können.

**BEZUGSZEICHEN**

| | | | |
|---|---|---|---|
| | | 19 | Rohr |
| 1 | Rohr | 20 | Abschnitt |
| 2 | Anschlussöffnung | 21 | Schulter |
| 3 | Grundkörper | 22 | Spule |
| 4 | Permanentmagnet | 23 | Magnetventil |
| 5 | Käfig | 24 | Verdichter |
| 6 | Schließkörper | 25 | Verflüssiger |
| 7 | Bohrung | 26 | Verdampfer |
| 8 | Ventilsitz | 27 | Kältemittelleitung |
| 9 | Vorsprung | 28 | Rohrschelle |
| 10 | Nut | 29 | Verzweigung |
| 11 | Dichtring | 30 | Stelle |
| 12 | Wulst | 31 | Käfig |
| 13 | Aussparung | 32 | Grundkörper |
| 14 | Bohrung | 33 | Durchgang |
| 15 | Fußstück | 34 | Strebe |
| 16 | Strebe | 35 | Ventilsitz |
| 17 | Kreuz | 36 | Kugel |
| 18 | Einbuchtung | | |

## Patentansprüche

1. Kombination von einem Magnetventil für eine Kältemaschine mit einem ein Kältemittel führenden ersten Rohr (1), und mit einem ein Kältemittel führenden zweiten Rohr (19), wobei das Magnetventil umfasst: - einen Grundkörper (3), der in dem ersten Rohr (1) verpresst ist, indem er an einer dem Rohr (1) zugewandten Umfangsfläche eine Aussparung (13) aufweist, in die das Rohr (1) eingepresst ist, und der einen Ventilsitz (8, 35) aufweist, der ein einteiliger Bestandteil des Grundkörpers ist, und - einen unter dem Einfluss eines Magnetfeldes bewegbaren Schließkörper (6), **dadurch gekennzeichnet, dass** ein zweites Rohr (19) einen in eine Anschlussöffnung (2) des ersten Rohrs (1) eingeschobenen verjüngten Abschnitt (20) aufweist, ein Käfig (5, 31), in dem der Schließkörper (6) bewegbar ist, mit dem Grundkörper (3) und einem Permanentmagneten (4) zu einer Baugruppe verbunden ist und die Baugruppe durch Einschieben des verjüngten Abschnitts (20) bis in eine durch Anschlagen einer Schulter (21) des zweiten Rohrs (19) an die Anschlussöffnung (2) definierte Stellung in das erste Rohr (1) eingeführt ist, und die Baugruppe in dieser definierten Stellung in dem ersten Rohr fixiert wird.

2. Magnetventil nach Anspruch 1, **dadurch gekennzeichnet, dass** der Ventilsitz (3) zwischen dem Permanentmagneten (4) und dem Schließkörper (6) angeordnet ist.

3. Magnetventil nach einem der vorhergehenden Ansprüche, **dadurch gekennzeichnet, dass** die Aussparung (13) sich rings um den Ventilsitz (3) erstreckt.

4. Magnetventil nach einem der vorhergehenden Ansprüche, **dadurch gekennzeichnet, dass** der Grundkörper (3) einen umlaufenden Dichtring (11) trägt.

5. Magnetventil nach einem der vorhergehenden Ansprüche, **dadurch gekennzeichnet, dass** der Grundkörper (3) ferromagnetisch ist.

6. Magnetventil nach einem der vorhergehenden Ansprüche, **dadurch gekennzeichnet, dass** der Käfig (5, 31) zum Ventilsitz (8, 35) hin verjüngt ist.

7. Magnetventil nach einem der vorhergehenden Ansprüche, **dadurch gekennzeichnet, dass** eine Spule (22) zur Erzeugung des Magnetfeldes um das Rohr (1) herum angeordnet ist.

8. Magnetventil nach Anspruch 7, **dadurch gekennzeichnet, dass** der Permanentmagnet (4) im Innern der Spule (22) angeordnet ist.

9. Magnetventil nach Anspruch 7, soweit auf Anspruch 5 rückbezogen, oder Anspruch 8, **dadurch gekennzeichnet, dass** der Grundkörper (3) im Innern der Spule (22) angeordnet ist.

10. Kältemaschine, insbesondere für ein Haushaltskältegerät, mit wenigstens einem in einer Kältemittelleitung (27) angeordneten Magnetventil (23) nach einem der vorhergehenden Ansprüche.

11. Kältemaschine nach Anspruch 10, **dadurch gekennzeichnet, dass** der Schließkörper (6) stromabwärts vom Ventilsitz (3) angeordnet ist.

## Claims

1. Combination of a solenoid valve for a refrigeration machine having a first pipe (1) guiding refrigerant, and having a second pipe (19) guiding refrigerant, wherein the solenoid valve comprises: a main body (3) crimped in the first pipe (1), by it having a recess (13) on a peripheral surface facing the pipe (1), into which recess the pipe (1) is impressed, and which has a valve seat (8, 35), which is a one-piece integral part of the main body, and a closing body (6) which can be moved under the influence of a magnetic field, **characterised in that** a second pipe (19) has a tapered section (20) introduced into a connecting opening (2) of the first pipe (1), a cage (5, 31), in which the closing body (6) can be moved, is connected to the main body (3) and a permanent magnet (4) to form a module, and the module is inserted into the first pipe (1) by introducing the tapered section (20) up to a position defined by stops of a shoulder (21) of the second pipe (19) at the connecting opening (2), and the module is fixed in the first pipe in this defined position.

2. Solenoid valve according to claim 1, **characterised in that** the valve seat (3) is arranged between the permanent magnet (4) and the closing body (6).

3. Solenoid valve according to one of the preceding claims, **characterised in that** the recess (13) extends annularly around the valve seat (3).

4. Solenoid valve according to one of the preceding claims, **characterised in that** the main body (3) bears a peripheral sealing ring (11).

5. Solenoid valve according to one of the preceding claims, **characterised in that** the main body (3) is ferromagnetic.

6. Solenoid valve according to one of the preceding claims, **characterised in that** the cage (5; 31) is tapered toward the valve seat (8; 35).

7. Solenoid valve according to one of the preceding claims, **characterised in that** a coil (22) for generating the magnetic field is arranged around the pipe (1).

8. Solenoid valve according to claim 7, **characterised in that** the permanent magnet (4) is arranged inside the coil (22).

9. Solenoid valve according to claim 7, if reference is made to claim 5, or claim 8, **characterised in that** the main body (3) is arranged inside the coil (22).

10. Refrigeration machine, in particular for a domestic refrigeration device, having at least one solenoid valve (23) arranged in a refrigerant pipe (27) according to one of the preceding claims.

11. Refrigeration machine according to claim 10, **characterised in that** the closing body (6) is arranged downstream of the valve seat (3).

## Revendications

1. Combinaison d'une électrovanne pour une machine frigorifique avec un premier tube (1) conduisant un réfrigérant et avec un deuxième tube (19) conduisant un réfrigérant, l'électrovanne comprenant : - un corps de base (3) qui est pressé dans le premier tube (1) du fait qu'il présente sur une surface circonférentielle tournée vers le tube (1) un évidement (13) dans lequel le tube (1) est pressé, et qui présente un siège de soupape (8, 35) qui est un composant d'une seule pièce du corps de base, et - un corps de fermeture (6) déplaçable sous l'influence d'un champ magnétique, **caractérisée en ce qu'**un deuxième tube (19) présente une section (20) rétrécie, enfoncée dans une ouverture de raccordement (2) du premier tube (1), **en ce qu'**une cage (5, 31) dans laquelle le corps de fermeture (6) est déplaçable, est reliée au corps de base (3) et à un aimant permanent (4) en un sous-groupe et **en ce que** le sous-groupe, par insertion de la section (20) rétrécie jusqu'à une position définie par butée d'un épaulement (21) du deuxième tube (19) sur l'ouverture de raccordement (2), est introduit dans le premier tube (1), et **en ce que** le sous-groupe est fixé dans le premier tube dans cette position définie.

2. Électrovanne selon la revendication 1, **caractérisée en ce que** le siège de soupape (3) est disposé entre l'aimant permanent (4) et le corps de fermeture (6).

3. Électrovanne selon l'une quelconque des revendications précédentes, **caractérisée en ce que** l'évidement (13) s'étend tout autour du siège de soupape (3).

4. Électrovanne selon l'une quelconque des revendications précédentes, **caractérisée en ce que** le corps de base (3) porte une bague d'étanchéité (11) périphérique.

5. Électrovanne selon l'une quelconque des revendications précédentes, **caractérisée en ce que** le corps de base (3) est ferromagnétique.

6. Électrovanne selon l'une quelconque des revendications précédentes, **caractérisée en ce que** la cage (5, 31) est rétrécie en direction du siège de soupape (8, 35).

7. Électrovanne selon l'une quelconque des revendications précédentes, **caractérisée en ce qu'**une bobine (22) destinée à générer le champ magnétique est disposée autour du tube (1).

8. Électrovanne selon la revendication 7, **caractérisée en ce que** l'aimant permanent (4) est disposé à l'intérieur de la bobine (22).

9. Électrovanne selon la revendication 7, dans la mesure où elle fait renvoi à la revendication 5, ou la revendication 8, **caractérisée en ce que** le corps de base (3) est disposé à l'intérieur de la bobine (22).

10. Machine frigorifique, notamment pour un appareil frigorifique à usage ménager, comprenant au moins une électrovanne (23) selon l'une quelconque des revendications précédentes, disposée dans une conduite de réfrigérant (27).

11. Machine frigorifique selon la revendication 10, **caractérisée en ce que** le corps de fermeture (6) est disposé en aval du siège de soupape (3).
